(19) Europäisches Patentamt
European Patent Office
Office européen des brevets

(11) **EP 1 628 813 B1**

(12) **EUROPÄISCHE PATENTSCHRIFT**

(45) Veröffentlichungstag und Bekanntmachung des Hinweises auf die Patenterteilung:
**23.04.2008   Patentblatt 2008/17**

(51) Int Cl.:
*B29B 13/10* (2006.01)          *B29B 17/00* (2006.01)
*B29C 47/10* (2006.01)          *B29C 47/58* (2006.01)

(21) Anmeldenummer: 04732071.8

(22) Anmeldetag: **11.05.2004**

(86) Internationale Anmeldenummer:
**PCT/AT2004/000167**

(87) Internationale Veröffentlichungsnummer:
**WO 2004/108380 (16.12.2004 Gazette 2004/51)**

(54) **VORRICHTUNG ZUR AUFBEREITUNG VON KUNSTSTOFFMATERIAL ZU RECYCLINGZWECKEN**

METHOD FOR PROCESSING SYNTHETIC MATERIAL FOR THE PURPOSE OF RECYCLING

DISPOSITIF POUR TRAITER DES MATIERES PLASTIQUES A DES FINS DE RECYCLAGE

(84) Benannte Vertragsstaaten:
**AT BE BG CH CY CZ DE DK EE ES FI FR GB GR HU IE IT LI LU MC NL PL PT RO SE SI SK TR**

(30) Priorität: **05.06.2003   AT 8862003**

(43) Veröffentlichungstag der Anmeldung:
**01.03.2006   Patentblatt 2006/09**

(73) Patentinhaber: **EREMA Engineering Recycling Maschinen und Anlagen Gesellschaft m.b.H.
4052 Ansfelden (AT)**

(72) Erfinder:
• **Helmut Bacher
4490 St. Florian (AT)**
• **Helmuth Schulz
4020 Linz (AT)**
• **Georg Wendelin
4033 Linz (AT)**

(74) Vertreter: **Wildhack, Helmut et al
Patentanwälte Wildhack - Jellinek
Landstrasser Hauptstrasse 50
1030 Wien (AT)**

(56) Entgegenhaltungen:
**EP-A- 1 173 315          WO-A-01/39948**

**Beschreibung**

Die Erfindung bezieht sich auf eine Vorrichtung zur Aufbereitung von Kunststoffmaterial zu Recyclingzwecken, insbesondere von thermoplastischem Kunststoffmaterial, mit einem Behälter, der oben eine Einbringeöffnung für das zu verarbeitende Material hat, wobei im Behälter zumindest ein bewegtes, vorzugsweise um die vertikale Behälterachse umlaufendes, Misch- und/oder Zerkleinerungswerkzeug angeordnet ist und das von diesem Werkzeug behandelte Material in eine im Behälter unten angeordnete Ausbringeöffnung geleitet wird, mit der die Einzugsöffnung eines Gehäuses einer eine Schnecke aufweisenden Einrichtung, vorzugsweise einer Plastifizier- oder Agglomeriereinrichtung, in Strömungsverbindung steht.

Eine derartige Vorrichtung gemäß dem Oberbegriff des Anspruchs 1 ist durch WO-A-01/39948 offenbart. Auch EP 1 173 315 offenbart eine ähnliche Vorrichtung, wobei die Plastifizier- oder Agglomeriereinrichtung zumeist eine Extruder-Schnecke aufweist, welche das von ihr geförderte Material direkt der nachgeschalteten Verarbeitung, zumeist einer Granuliereinrichtung, zuführt. Die Schnecke kann aber auch eine reine Transportschnecke sein, welche das Material einer nachgeschalteten Bearbeitungsstufe zuführt, z. B. einer nochmaligen Bearbeitung mittels umlaufender Werkzeuge, wobei erst aus dieser Bearbeitungsstufe das Material einer Plastifizier- oder Agglomeriereinrichtung zugeführt wird. Die bekannten Vorrichtungen arbelten im Prinzip zufriedenstellend, haben aber häufig Schwierigkeiten hinsichtlich der Befütterung der an die Ausbringeöffnung angeschlossenen Einrichtung, insbesondere dann, wenn es sich bei dieser Einrichtung um eine Plastifizier- oder Agglomeriereinrichtung handelt. Angestrebt wird ein möglichst gleichmäßiger Einzug an der Schnecke und damit ein möglichst gleichmäßiger Austrag dieser Einrichtung, was insbesondere dann von Wichtigkeit ist, wenn an einen Extruder eine Formanlage angeschlossen ist, bei der es darauf ankommt, dass das zu formende Material möglichst gleichmäßig zugeführt wird. Die erwähnten Schwierigkeiten sind unter anderem dadurch bedingt, dass das zu verarbeitende Material zumeist stark unterschiedlich ist, sowohl hinsichtlich der chemischen Zusammensetzung des Materials, als auch hinsichtlich seiner äußeren Beschaffenheit (Verschmutzungsgrad, Teilchengröße, Teilchenform usw.).

Die Erfindung setzt sich zur Aufgabe, diese Schwierigkeiten zu überwinden und eine Vorrichtung der eingangs geschilderten Art so zu verbessern, dass ein möglichst gleichmäßiger Einzug des zu verarbeitenden Materiales an der Einrichtung erzielt wird, welche an die Ausbringeöffnung angeschlossen ist, sodass ein gleichmäßiger Ausstoß am Austragsende der Schnecke, insbesondere einer Plastifizier- oder Agglomeriereinrichtung, erzielt wird. Die Erfindung löst diese Aufgabe dadurch, dass das Gehäuse der an die Ausbringeöffnung angeschlossenen Einrichtung mindestens zwei Schnekken enthält, die mit vom Behälter kommenden Material gemeinsam befüttert werden und dass der Durchmesser D des Behälters zum Durchmesser d jeder der Schnecken in folgender Beziehung steht:

$$D = 10 \, \sqrt[3]{d^2 K},$$

worin

D   der Innendurchmesser des kreiszylindrischen Behälters in mm oder der Innendurchmesser eines auf gleiches Fassungsvermögen umgerechneten fiktiven kreiszylindrischen Behälters gleicher wirksamer Höhe ist,

d   der Schneckendurchmesser in mm und

K   eine Konstante ist, welche größer oder gleich 50 ist.

Gegenüber den herkömmlichen Einschnekkenkonstruktionen wird somit im Rahmen der Erfindung auf eine Doppel- oder Multi-Schneckenkonstruktion übergegangen. Bisher hatte man gegenüber Doppelschneckenextrudern das Bedenken der relativ hohen Kosten, doch haben die Erfahrungen der Anmelder gezeigt, dass die komplizierten Maßnahmen, welche bei Einschneckenkonstruktionen notwendig waren, um ein einigermaßen gleichmäßiges Einzugsverhalten zu erzielen, sich den Kosten einer Doppelschneckenkonstruktion annähern. Hinzu kommt, dass, im Vergleich zu Einschneckenkonstruktionen, die Schnecken und deren Zylinder von Doppelschneckenzylinderkonstruktionen wesentlich kürzer gebaut werden können und bei gleichem Schneckendurchmesser etwa der 1,5- bis 2-fache Ausstoß (z.B. bei Verarbeitung von Polyethylen) erreicht wird.

Im Zusammenhang hiermit ist aber auch die erwähnte Bemessung des Behälters von Bedeutung, um die erwähnte gleichmäßige Befütterung der Schnecken sicherzustellen.

Durch diese erfindungsgemäße Bauweise ergibt sich ein konstanter Einzug des zu verarbeitenden Materiales zu den Schnecken, auch dann, wenn das Material im Behälter warmweich ist. Da - im Vergleich zu Einschneckenkonstruktionen - die Schneckenlänge kürzer gehalten werden kann, bei einer Doppelschneckenkonstruktion etwa um die Hälfte verkürzt, ergibt sich bei gleichem Ausstoß der Vorrichtung ein wesentlich verringerter Platzbedarf. Im Zwickelbereich der Schnecken ergeben sich bessere Plastifiziereigenschaften, da dort das Material durch Scherung und Knetwirkung besonders intensiv bearbeitet wird. Es hat sich auch gezeigt, dass eine solche Konstruktion hinsichtlich der Schnekkengeometrie unempfindlicher ist auf die Verarbeitung voneinander unterschiedlicher Kunststoffsorten, sodass die Vorrichtung universeller einsetzbar ist.

Ein weiterer Vorteil der erfindungsgemäßen Konstruktion liegt darin, dass die bisher im Einzugsbereich zumeist notwendige gekühlte Nutenbüchse, welche einem starken Verschleiß unterliegt, entfallen kann. Dies bringt nicht nur eine Kostenersparnis, sondern auch den Vorteil eines geringeren Anfahrdrehmomentes für den Antriebsmotor.

Vorzugsweise ist im Rahmen der Erfindung K größer als 100, wie die Erfahrungen gezeigt haben.

Weiters hat es sich im Rahmen der Erfindung gezeigt, dass die Befütterung der von den Schnecken und ihrem Gehäuse gebildeten Einrichtung, insbesondere wenn diese von einer Plastifizier- oder Agglomeriereinrichtung gebildet ist, um so besser wird, je kürzer der Weg ist, den das zu verarbeitende Material vom Behälter zu den Schnecken zurücklegen muss. Gemäß einer Weiterbildung der Erfindung ist daher die Konstruktion so getroffen, dass das Gehäuse der Plastifizier- oder Agglomeriereinrichtung unmittelbar an die Ausbringeöffnung des Behälters angeschlossen ist, sodass die Einzugsöffnung des Gehäuses der Plastifizier- oder Agglomeriereinrichtung der Ausbringeöffnung des Behälters unmittelbar benachbart ist oder mit ihr zusammenfällt. Hierfür ist es zweckmäßig, wenn das Gehäuse der beiden Schnecken tangential an den Umfang des Behälters angeschlossen ist, obwohl im Prinzip auch davon abweichende Anordnungen möglich sind, z.B. eine radiale Anordnung.

Die günstigste Anordnung im Rahmen der Erfindung ergibt sich, wenn die Querschnitte der Schnecken im Gehäuse der Plastifizier- oder Agglomeriereinrichtung im Bereich der Einzugsöffnung vertikal oder schräg übereinander liegen. Die Vertikalanordnung ergibt die kürzesten Wege des zu verarbeitenden Materiales vom Behälter zu den Schnecken. Wird davon abgewichen, z.B. bei einer schrägen Anordnung der Schneckenquerschnitte oder gar bei einer Nebeneinanderanordnung, dann ist es zumeist erforderlich, die entstehende Oberfläche im Gehäuse der Plastifizier- bzw. Agglomeriereinrichtung im Bereich der Einzugsöffnung zu kühlen und dafür Kühlkanäle anzuordnen, um ein Ankleben gestauten Materiales an dieser Oberfläche zu verhindern.

Die Gänge der Schnecken können zumindest im Bereich der Einzugsöffnung miteinander kämmen. Dies hat den Vorteil einer Selbstreinigung der Schneckengänge, was gerade im Einzugsbereich von Wichtigkeit ist. Wenngleich gleiche Schneckendurchmesser der beiden Schnecken zweckmäßig sind, ist dies nicht unbedingt erforderlich und es können die beiden Schnecken auch unterschiedliche Längen aufweisen, z.B. dann, wenn die eine Schnecke als Zubringerschnecke für die andere Schnecke wirkt. Bei unterschiedlichen Schneckendurchmessern ist in der zuvor erwähnten Formel für d der Mittelwert der Schneckendurchmesser zu nehmen. Wenn der Schneckendurchmesser über die Schneckenlänge nicht konstant ist (z. B. bei konischen Schnecken), dann ist der mittlere Schneckendurchmesser einzusetzen.

Das eingangs erwähnte günstige Einzugsverhalten des zu verarbeitenden Materiales wird im Rahmen der Erfindung noch weiter dadurch verbessert, dass jene Seitenwand der Einzugsöffnung, an der das Werkzeug abläuft, eine gegen die Längsachse des Gehäuses der Schnecken kontinuierlich verlaufende Erweiterung der Einzugsöffnung berandet, die sich, in Richtung zur Achse des Gehäuses der Schnecken gesehen, zumindest bis zum Umfang der Schneckengänge der benachbarten Schnecke erstreckt, vorzugsweise bis in den Bereich der Schneckenachse, sodass diese Erweiterung eine mit diesen Schneckengängen zusammenwirkende unterbrechungslose Scherkante bildet. Bei besonders günstigen Ausführungsformen schließt die die Erweiterung umrandende Seitenwand der Einzugsöffnung mit der Schneckenachse einen Winkel von 20° bis 80°, vorzugsweise 30 bis 55°, ein. Ebenso hat es sich durch Versuche als besonders günstig für das erwähnte Einzugsverhalten erwiesen, wenn für die Einzugsöffnung des Gehäuses der Schnecken folgende Formeln gelten:

$$h \geq k\,0{,}6\,d$$

und

$$L \geq k\,0{,}6\,d,$$

worin

h  die in Achsrichtung des Behälters gemessene wirksame Höhe der Einzugsöffnung in mm ist,
L  die in Umfangsrichtung des Behälters gemessene wirksame Länge der Einzugsöffnung in mm ist,
d  der Schneckendurchmesser in mm ist und
k  die Anzahl der Schnecken bedeutet, wobei k vorzugsweise 2 ist.

Ferner ist es günstig, wenn der Boden der Einzugsöffnung von den Schnecken in Richtung zum Behälter abfällt.

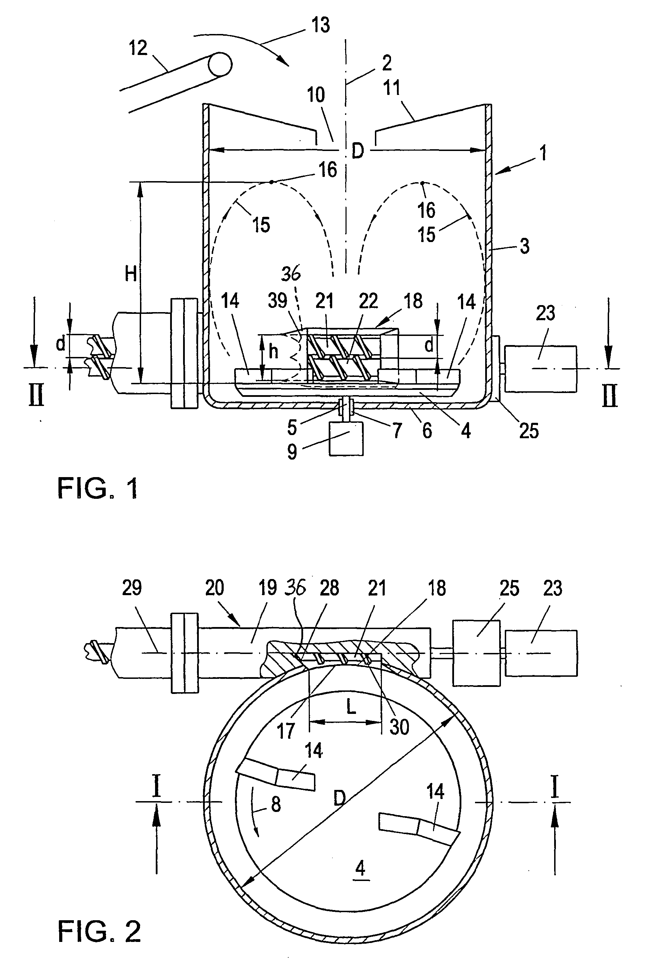

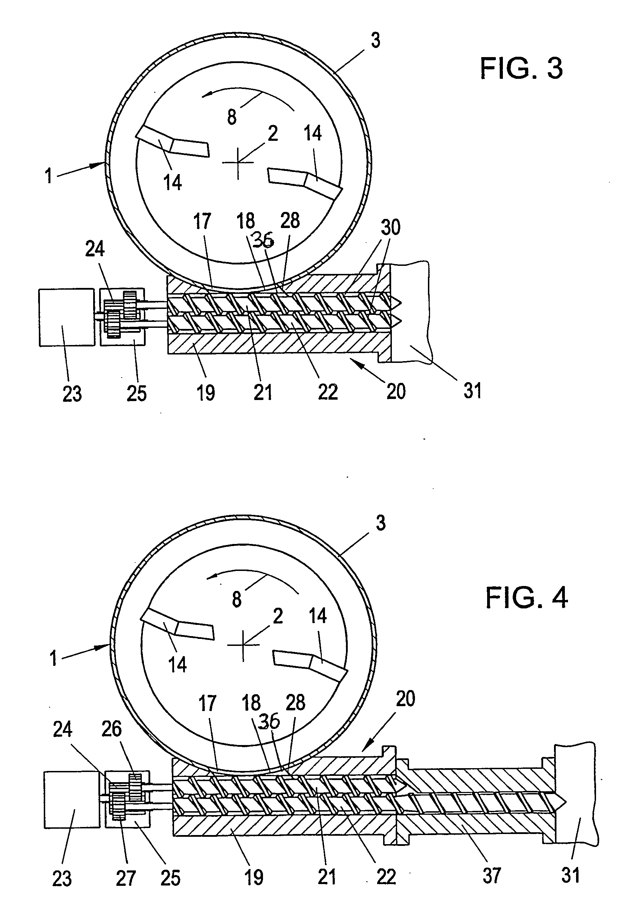

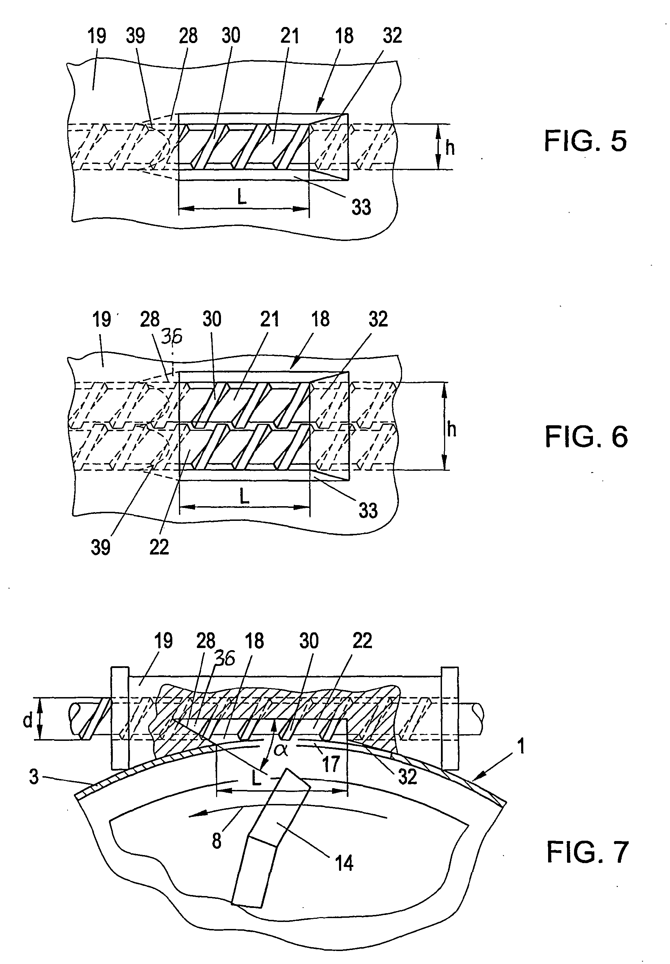

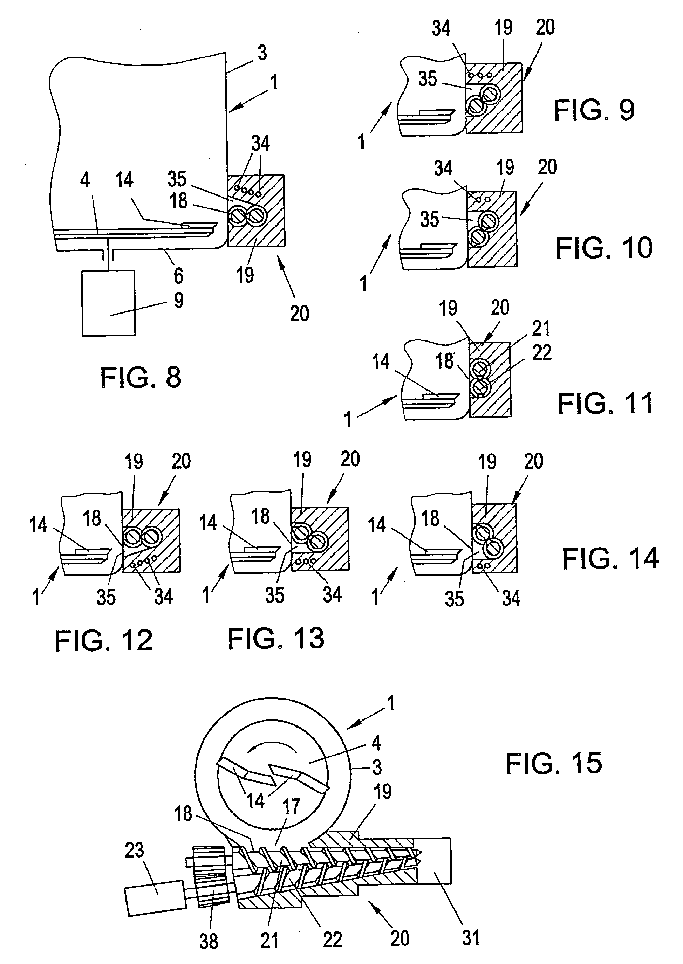

Weitere Kennzeichen und Vorteile der Erfindung ergeben sich aus der Beschreibung von Ausführungsbeispielen des Erfindungsgegenstandes, welche in der Zeichnung schematisch dargestellt sind. Fig. 1 zeigt einen Vertikalschnitt durch eine erste Ausführungsform, gesehen nach der Schnittlinie I - I der Fig. 2, welche einen Schnitt nach der Linie II - II der Fig. 1 zeigt. Fig. 3 zeigt eine Ausführungsform im Horizontalschnitt mit nebeneinanderliegenden Schnecken gleicher Länge. Fig. 4 zeigt eine Ausführungsvariante zu Fig. 3, bei welcher die beiden Schnecken unterschiedliche Länge aufweise. Fig. 5 zeigt bei einer Anordnung nach Fig. 3 die Ausbildung der Einzugsöffnung. Fig. 6 zeigt die Ausbildung der Einzugsöffnung bei einer Anordnung nach Fig. 1 und Fig. 7 zeigt die Ausbildung der Einzugsöffnung im Horizontalschnitt. Die Fig. 8 bis 14 zeigen, jeweils im Vertikalschnitt, verschiedene Möglichkeiten für die Anordnung der Schnecken. Fig. 15 zeigt im Horizontalschnitt eine Anordnung mit einem konischen Doppelschneckenextruder.

Bei der Vorrichtung nach den Fig. 1, 2, 6 und 7 bildet die Vorrichtung eine Zerreißer-Extruder-Kombination mit Doppelschnecke, welche einen Behälter 1 mit vertikaler Achse 2 und Kreisquerschnitt hat, dessen Seitenwand 3 im Wesentlichen zylindrisch verläuft. Im Behälter 1 läuft um die Achse 2 eine Trägerscheibe 4 in Richtung des Pfeiles 8 (Fig. 2) um, die auf einer Welle 5 sitzt, die den Boden 6 des Behälters 1 abgedichtet durchsetzt und im Boden 6 in Lagern 7 drehbar gelagert ist. Die Welle 5 wird von einem Motor 9 zur Drehung angetrieben.

Der Behälter 1 hat oben eine Einbringeöffnung 10 für das zu verarbeitende Material, zweckmäßig in einer trichterförmig verlaufenden Deckwand 11. Wenn das Material unter Vakuum verarbeitet werden soll, ist an den Behälter 1 eine Evakuiereinrichtung angeschlossen, und die Einbringeöffnung 10 ist mit einer zweckmäßig gleichfalls evakuierbaren Schleuse versehen. Zur Einbringeöffnung 10 wird das zu verarbeitende Material von einer Zubringeeinrichtung 12, z.B. einem Förderband, zugeführt und in Richtung des Pfeiles 13 in die Öffnung 10 eingeworfen.

Die im Bereich des Bodens 6 angeordnete Trägerscheibe 4 trägt mehrere Werkzeuge 14, die auf das in den Behälter 1 eingebrachte Material, zumeist thermoplastische Recyclingware, zumindest mischend einwirken, zumeist auch zerkleinernd und trocknend. In letzterem Fall sind die Werkzeuge 14 als Messer mit Schneiden ausgebildet. Das von den Werkzeugen 14 von der Trägerscheibe 4 abgeschleuderte Material steigt an der Seitenwand 3 des Behälters 1 in Form einer Mischtrombe 15 hoch und fällt nach Erreichung eines Kulminationspunktes 16 wieder in den Bereich der Behälterachse 2 zurück. Auf diese Weise wird das verarbeitete Material gut durchgemischt bzw. zerkleinert und getrocknet und nach Erreichung einer genügenden Verweilzeit im Behälter 1 aus diesem durch eine Ausbringeöffnung 17 ausgebracht, welche in der dargestellten Ausführungsform mit der Einzugsöffnung 18 des Gehäuses 19 einer Plastifizier- bzw. Agglomeriereinrichtung 20, im vorliegenden Fall eines Extruders, zusammenfällt, zumindest aber damit in Strömungsverbindung steht. Die Einrichtung 20 weist zwei im Gehäuse 19 angeordnete Schnecken 21, 22 auf, die von einem Motor 23 in der gleichen Drehrichtung gleichlaufend angetrieben werden, so dass ihre Schneckengänge miteinander kämmen können. Eine hierzu geeignete mögliche Antriebsanordnung ist in den Fig. 3 und 4 dargestellt. Der Motor 23 treibt ein Sonnenzahnrad 24 an, das in einem Getriebegehäuse 25 gelagert ist und zwei Planetenzahnräder 26, 27 antreibt, welche mit den Wellen der beiden Schnecken 21, 22 drehschlüssig verbunden sind.

Zur Erzielung einer - im Vergleich zu einem Einschneckenextruder - doppelten Ausstoßmenge hat es sich gezeigt, dass die Behälterabmessungen der Beziehung nach folgender empirisch ermittelter Faustformel genügen müssen:

$$D = 10 \; \sqrt[3]{d^2 K} \; ,$$

worin D der Innendurchmesser des Behälters 1 in mm ist, d der Schneckendurchmesser der beiden Schnecken 21, 22 in mm und K eine Konstante ist, welche zumindest 50 beträgt, vorzugsweise jedoch zumindest 100. Diese Formel gilt für einen kreiszylindrischen Behälter. Ist dieser Behälter nicht kreiszylindrisch oder nicht zylindrisch, etwa kegelförmig, so ist D umzurechnen auf den Innendurchmesser eines fiktiven kreiszylindrischen Behälters gleichen Fassungsvolumens, d.h. gleicher wirksamer Höhe. Als wirksame Höhe H gilt hierbei jede Distanz, in welcher der Kulminationspunkt 16 der Mischtrombe 15 über dem Oberrand der Trägerscheibe 4 liegt, sinnvolle Betriebsverhältnisse vorausgesetzt.

Anderseits ist aber in vielen Fällen auch die Bemessung und Gestaltung der Einzugsöffnung 18 des Schneckengehäuses 19 von Bedeutung. In diese Einzugsöffnung, die zumindest teilweise auf der Höhe der im Behälter 1 umlaufenden Werkzeuge 14 liegt, wird das im Behälter 1 gemischte, gegebenenfalls zerkleinerte, und dadurch erwärmte und gegebenenfalls getrocknete Kunststoffgut von den Werkzeugen 14 eingeschleudert. Dies kann dadurch unterstützt werden, dass die - in Pfeilrichtung 8 gesehen - vorlaufenden Kanten der Werkzeuge entgegen der Bewegungsrichtung abgewinkelt oder gebogen sind, so dass sich beim Umlauf der Werkzeuge 14 eine spachtelartige Eindrückung des Materiales in die Einzugsöffnung 18 ergibt. Versuche haben ergeben, dass besonders günstige Verhältnisse vorliegen, wenn für die Einzugsöffnung 18 folgende Maße gelten:

$$h \geq k\,0{,}6\,d$$

und

$$L \geq k\,0{,}6\,d,$$

worin

h   die in Achsrichtung des Behälters 1 gemessene wirksame Höhe der Einzugsöffnung 18 in mm ist,

L   die in Umfangsrichtung des Behälters 1 gemessene wirksame Länge der Einzugsöffnung 18 in mm ist,

d   der Schneckendurchmesser in mm ist, und

k   die Anzahl der Schnecken bedeutet, wobei k vorzugsweise 2 ist.

Als wirksame Länge bzw. wirksame Höhe der Einzugsöffnung 18 gilt hierbei der in Bezug auf die Durchtrittsrichtung des Materiales vom Behälter 1 in das Gehäuse 9 wirksame lichte Querschnitt.

Ferner haben Versuche gezeigt, dass das in die Einzugsöffnung 18 eingebrachte Material mitunter dazu neigt, sich im Bereich jenes Randes der Einzugsöffnung 18 zu stauen, an welchem die Werkzeuge 14 ablaufen, in Fig. 2 also der linksliegende Rand der Einzugsöffnung. 18. Um einen solchen Stau zu vermeiden, hat es sich als zweckmäßig erwiesen, jene Seitenwand 28 der Einzugsöffnung 18, an welcher die erwähnten Werkzeuge 14 ablaufen (das ist die in den Fig. 3 und 4 rechts liegende Seitenwand 28), so schräg in Bezug auf die Längsachse 29 des Schneckengehäuses 19 anzuordnen, das sich, in Eintrittsrichtung des Kunststoffmateriales gesehen, eine in Richtung zur Schneckenachse kontinuierlich verlaufende Erweiterung 36 der Einzugsöffnung 18 bildet. Der Winkel $\alpha$ (Fig. 7), welchen diese Seitenwand 28 mit der Längsachse 29 des Schneckengehäuses 19 einschließt, beträgt jedenfalls weniger als 90°, und zwar 20 bis 80°, vorzugsweise 30 bis 55°. Die Seitenwand 28 erstreckt sich hierbei bis zumindest zum Umfang der Schneckengänge 30 der benachbarten Schnecke 21 bzw. 22, vorzugsweise bis in den Bereich der Achse dieser Schnecke. Diese Längsachse der Schnecke fällt bei einer vertikalen Anordnung der beiden Schnecken 21, 22, in der Draufsicht gesehen mit der Achse 29 des Schneckengehäuses 9 zusammen (Fig. 2). Die Kante dieser Seitenwand 28, insbesondere ihr Ende, bildet eine mit den Schneckengängen 30 zusammenwirkende Scherkante 39 (Fig. 1, 5, 6), welche, da keine Nutenbüchse angeordnet ist, in Umfangsrichtung der Schnecken 21, 22 kontinuierlich, also unterbrechungslos, verläuft.

Bei der Ausführungsform nach den Fig. 1, 2 und 7 sind die beiden Schnecken 21, 22 vertikal übereinander angeordnet und die Schneckenachsen liegen horizontal. Beides ist nicht unbedingt erforderlich, wenngleich diese Anordnungen am günstigsten sind. Wenn davon abgewichen werden muss, so können, wie die Fig. 3 und 4 zeigen, die beiden Schnecken 21, 22 horizontal nebeneinander liegen. Bei der Ausführungsform nach Fig. 3 sind beide Schnecken 21, 22 gleich lang und im gleichen Drehsinn angetrieben, ihre Schneckengänge 30 können miteinander kämmen. Beide Schnecken 21, 22 fördern somit gemeinsam in einen an das Schneckengehäuse 19 angeschlossenen Extruderkopf 31.

Die Anordnung nach Fig. 4 weicht von jener nach Fig. 3 insoferne ab, als die beiden Schnecken 21, 22 unterschiedliche Längen haben, und zwar ist die dem Behälter 1 benachbarte Schnecke 21 kürzer als die andere Schnecke 22. Die Schnecke 21 übernimmt daher das aus dem Behälter 1 durch dessen Ausbringeöffnung 17 in die Einzugsöffnung 18 des Schneckengehäuses 19 geschleuderte Material, wobei dieses Einzugsverhalten durch die zuvor erwähnte Bemessung des Behälters 1 und der Einzugsöffnung 18 sowie durch die Gestaltung der Seitenwand 28 derselben verbessert wird. Die Schnecke 21 übergibt im Laufe ihrer Förderstrecke das von ihr übernommene Material an die andere Schnecke 22, welche das Material dem angeschlossenen Extruderkopf 31 zuführt. Diese Anordnung hat außer dem Vorteil eines gleichmäßigen Einzuges noch die Vorteile eines billigeren Austragsgehäuses 37 und eines billigeren Einlaufstückes zum Extruderkopf 31.

Die nähere Ausbildung der Einzugsöffnung 18 für Konstruktionen nach den Fig. 3 und 4 ist in Fig. 6 dargestellt.

Aus den Fig. 5, 6 und 7 ist ersichtlich, dass auch an jenem Rand der Einzugsöffnung 18, an welchem die Werkzeuge 14 zulaufen, d.i. in den Fig. 5, 6 und 7 der rechts liegende Rand, eine Anschrägung 32 vorgesehen ist, um das Einzugsverhalten zu verbessern. Ferner ist der Boden 33 der Einzugsöffnung 18 in Richtung zum Behälter 1 hin geneigt, sodass die von ihm gebildete Wand der Einzugsöffnung von der Schnecke 22 in Richtung zum Behälter 1 abfällt.

Wie bereits erwähnt, können die beiden Schnecken 21, 22 im Prinzip jedwede Lage relativ zueinander einnehmen. Unterschiedliche Anordnungen sind in den Fig. 8 bis 14 dargestellt. Die in Fig. 11 dargestellte Lage der beiden Schnecken 21, 22 vertikal übereinander ist die günstigste Anordnung, weil dann die Gefahr des Anklebens von Kunststoffteilchen an der Oberfläche des Einzugsbereiches des Schneckengehäuses nicht gegeben ist, anders als bei anderer Lage der Schnecken 21, 22. Von der Anordnung nach Fig. 11 abweichende Anordnungen sind zwar im Prinzip auch brauchbar, jedoch ist bei solchen Anordnungen das erwähnte Ankleben von z.B. klebrigen Kunststoffteilchen und das daraus folgende Zuwachsen der Fütterungsöffnung möglich. Dies kann zu Überhitzungen dieser Materialteilchen führen. Um dies zu vermeiden, empfiehlt es sich, bei von Fig. 11 abweichenden Anordnungen der Schnecken 21, 22 Kühlkanäle 34 in jenem Bereich des von der Einzugsöffnung 18 berandeten Abschnittes des Gehäuses 19 anzuordnen, wo sich im Anschluss an die Einzugsöffnung 18 Hohlräume 35 befinden, die zu dem erwähnten Ankleben und den daraus folgenden übermäßig langen Verweilzeiten der bearbeiteten Materialteilchen führen können. Je größer diese Hohlräume 35 sind und je mehr sie sich im Gehäuse 19 in Richtung vom Behälter 1 weg erstrecken, desto mehr Kühlkanäle 34 sind zweckmäßig vorzusehen.

Wenngleich die Ausbildung der beiden Schnecken 21, 22 mit gleichem und konstantem Schneckendurchmesser d (Fig. 7) aus Kostengründen am günstigsten ist, so ist dies nicht unbedingt erforderlich. Fig. 15 zeigt nämlich eine Ausführungsform mit zwei Schnecken 21, 22, die beide konisch ausgebildet sind und gemeinsam einen Doppelschneckenextruder bilden, der zu einem Extruderkopf 31 fördert. Die beiden Schnecken 21, 22 sind hierbei gegenläufig über miteinander kämmende Zahnräder 38 von einem gemeinsamen Motor 23 angetrieben. Ihre Schneckengänge 30 können miteinander kämmen, sodass also auch bei dieser Ausführungsform eine Selbstreinigung im Einzugsbereich erzielt wird.

Wenngleich die horizontale Anordnung des die Schnecken 21, 22 aufweisenden Gehäuses 19 die günstigste ist, so ist es im Prinzip möglich, dieses Gehäuse mit geneigter Längsachse an den Behälter 1 anzuschließen, gegebenenfalls sogar vertikal.

Wenngleich bei den vorstehend beschriebenen Ausführungsbeispielen jeweils nur zwei Schnecken dargestellt sind, so sind theoretisch auch Konstruktionen mit drei oder mehr Schnecken in analoger Bauweise möglich, für welche Konstruktionen die zuvor erwähnten Formeln ebenfalls gelten. Solche mit drei oder mehr Schnekken versehene Konstruktionen sind aber aus wirtschaftlichen Gründen nicht von wesentlicher Bedeutung.

### Patentansprüche

1. Vorrichtung zur Aufbereitung von Kunststoffmaterial zu Recyclingzwecken, insbesondere von thermoplastischem Abfallkunststoffmaterial, mit einem Behälter (1), der oben eine Einbringeöffnung (10) für das zu verarbeitende Material hat, wobei im Behälter (1) zumindest ein bewegtes Misch- und/oder Zerkleinerungswerkzeug (14) angeordnet ist, und das von diesem Werkzeug (14) behandelte Material in eine im Behälter (1) unten angeordnete Ausbringeöffnung (17) geleitet wird, mit der die Einzugsöffnung (18) eines Gehäuses einer eine Schnecke (21) aufweisenden Einrichtung (20) in Strömungsverbindung steht, **dadurch gekennzeichnet, dass** die an die Ausbringeöffnung (17) angeschlossene Einrichtung (20) mindestens zwei Schnecken (21, 22) enthält, die mit vom Behälter (1) kommenden Material gemeinsam befüttert werden und dass der Durchmesser (D) des Behälters (1) zum Durchmesser (d) jeder der Schnecken (21, 22) in folgender Beziehung steht:

$$D = 10 \ \sqrt[3]{d^2 K} \ ,$$

worin

D der Innendurchmesser des kreiszylindrischen Behälters (1) in mm oder der Innendurchmesser eines auf gleiches Fassungsvolumen umgerechneten fiktiven kreiszylindrischen Behälters gleicher wirksamer Höhe ist,
d der Schneckendurchmesser in mm ist und
K eine Konstante ist, welche größer oder gleich 50 ist.

2. Vorrichtung nach Anspruch 1, **dadurch gekennzeichnet, dass** K größer ist als 100.

3. Vorrichtung nach Anspruch 1 oder 2, **dadurch gekennzeichnet, dass** das Gehäuse der die Schnekken (21, 22) aufweisenden Einrichtung (20) unmittelbar an die Ausbringeöffnung (17) des Behälters (1) angeschlossen ist, sodass eine Einzugsöffnung (18) des Gehäuses (19) dieser Einrichtung (20) der Ausbringeöffnung (17) des Behälters (1) unmittelbar benachbart ist oder mit ihr zusammen fällt.

4. Vorrichtung nach Anspruch 3, **dadurch gekennzeichnet, dass** das Gehäuse (19) der beiden Schnecken (21, 22) tangential an den Umfang des Behälters (1) angeschlossen ist.

5. Vorrichtung nach Anspruch 4, **dadurch gekennzeichnet, dass** die Querschnitte der Schnecken (21, 22) im Gehäuse (19) im Bereich der Einzugsöffnung (18) vertikal oder schräg übereinander liegen.

6. Vorrichtung nach einem der Ansprüche 1 bis 5, **dadurch gekennzeichnet, dass** die die Schnecken (21, 22) aufweisende Einrichtung (20) eine Plastifizier- oder Agglomeriereinrichtung ist.

7. Vorrichtung nach Anspruch 5 oder 6, **dadurch gekennzeichnet, dass** im Gehäuse (19) der Schnekken (21, 22) im Bereich der Einzugsöffnung (18) Kühlkanäle (34) angeordnet sind.

8. Vorrichtung nach einem der Ansprüche 1 bis 7, **dadurch gekennzeichnet, dass** die Schneckengänge (30) der Schnecken (21, 22) zumindest im Bereich der Einzugsöffnung (18) miteinander kämmen.

9. Vorrichtung nach einem der Ansprüche 1 bis 8, **dadurch gekennzeichnet, dass** das Misch- und/oder Zerkleinerungswerkzeug (14) um die vertikale Behälterachse (2) umläuft.

10. Vorrichtung nach einem der Ansprüche 4 bis 9, **dadurch gekennzeichnet, dass** jene Seitenwand (28) der Einzugsöffnung (18), an der die Werkzeuge (14) ablaufen, eine gegen die Längsachse (29) des Gehäuses (19) der Schnecken (21, 22) kontinuierlich verlaufende Erweiterung (36) der Einzugsöffnung (18) berandet, die sich, in Richtung zur erwähnten Längsachse gesehen, zumindest bis zum Umfang der Schneckengänge (30) der benachbarten Schnecke (21 bzw. 22) erstreckt, sodass diese Erweiterung (36) eine mit diesen Schneckengängen (30) zusammenwirkende unterbrechungslose Scherkante (39) bildet.

11. Vorrichtung nach Anspruch 10, **dadurch gekennzeichnet, dass** sich die Erweiterung (36) bis in den Bereich der Schneckenachse erstreckt.

**12.** Vorrichtung nach Anspruch 10 oder 11, **dadurch gekennzeichnet, dass** die die Erweiterung (36) berandende Seitenwand (28) der Einzugsöffnung (18) mit der Längsachse (29) des Schneckengehäuses (19) einen Winkel zwischen 20 und 80°, vorzugsweise zwischen 30 und 55°, einschließt.

**13.** Vorrichtung nach einem der Ansprüche 1 bis 12, **dadurch gekennzeichnet, dass** für die Einzugsöffnung (18) des Gehäuses (19) der Schnecken (21, 22) folgende Formeln gelten:

$$h \geq k\, 0{,}6\, d$$

und

$$L \geq k\, 0{,}6\, d,$$

worin

> h die in Achsrichtung des Behälters (1) gemessene wirksame Höhe der Einzugsöffnung (18) in mm ist,
> L die in Umfangsrichtung des Behälters (1) gemessene wirksame Länge der Einzugsöffnung (18) in mm ist,
> d der Außendurchmesser der Schneckengänge (30) in mm ist und
> k die Anzahl der Schnecken bedeutet, wobei k vorzugsweise 2 ist.

**14.** Vorrichtung nach einem der Ansprüche 1 bis 13, **dadurch gekennzeichnet, dass** der Boden (33) der Einzugsöffnung (18) von den Schnecken (21, 22) in Richtung zum Behälter (1) abfällt.

**Claims**

**1.** A device for the preparation of plastics material for recycling purposes, in particular thermoplastic waste plastics material, comprising a container (1) which has an inlet opening (10) at the top for the material to be processed, wherein at least one movable mixing and/or comminuting tool (14) is arranged in the container (1), and the material treated by this tool (14) is fed through an outlet opening (17) which is arranged at the bottom of the container (1) and to which the feed opening (18) of a housing of an apparatus (20) comprising a screw (21) is fluidically connected, **characterised in that** the apparatus (20) connected to the outlet opening (17) contains at least two screws (21, 22) which are jointly charged with material coming from the container (1) and **in**

**that** the diameter (D) of the container (1) and the diameter (d) of each of the screws (21, 22) are in the following relationship:

$$D = 10 \sqrt[3]{d^2\, K}\ ,$$

where

> D is the inner diameter of the circular cylindrical container (1) in mm or the inner diameter of a hypothetical circular cylindrical container converted to the same capacity and having the same effective height,
> d is the screw diameter in mm and
> K is a constant greater than or equal to 50.

**2.** A device according to claim 1, **characterised in that** K is greater than 100.

**3.** A device according to claim 1 or 2, **characterised in that** the housing of the apparatus (20) comprising the screws (21, 22) is directly connected to the outlet opening (17) of the container (1) so that a feed opening (18) of the housing (19) of this apparatus (20) is directly adjacent to the outlet opening (17) of the container (1) or coincides therewith.

**4.** A device according to claim 3, **characterised in that** the housing (19) of the two screws (21, 22) is connected tangentially to the circumference of the container (1).

**5.** A device according to claim 4, **characterised in that** the cross-sections of the screws (21, 22) in the housing (19) lie vertically or obliquely above one another in the region of the feed opening (18).

**6.** A device according to any one of claims 1 to 5, **characterised in that** the apparatus (20) comprising the screws (21, 22) is a plasticiser or agglomerator.

**7.** A device according to claim 5 or 6, **characterised in that** cooling ducts (34) are provided in the housing (19) of the screws (21, 22) in the region of the feed opening (18).

**8.** A device according to any one of claims 1 to 7, **characterised in that** the turns (30) of the screws (21, 22) mesh with one another at least in the region of the feed opening (18).

**9.** A device according to any one of claims 1 to 8, **characterised in that** the mixing and/or comminuting tool (14) rotates about the vertical container axis (2).

## Page 13 — EP 1 628 813 B1 — Page 14

**10.** A device according to any one of claims 4 to 9, **characterised in that** the side wall (28) of the feed opening (18), at which the tools (14) discharge, defines a widening (36) of the feed opening (18), the widening (36) extending continuously towards the longitudinal axis (29) of the housing (19) of the screws (21, 22) and, seen in the direction of the aforementioned longitudinal axis, extending at least as far as the circumference of the turns (30) of the adjacent screw (21 or 22) so that this widening (36) forms an uninterrupted shearing edge (39) co-operating with these screw turns (30).

**11.** A device according to claim 10, **characterised in that** the widening (36) extends into the region of the screw axis.

**12.** A device according to claim 10 or 11, **characterised in that** the side wall (28) defining the widening (36) of the feed opening (18) forms an angle between 20° and 80°, preferably between 30° and 55°, with the longitudinal axis (29) of the screw housing (19).

**13.** A device according to any one of claims 1 to 12, **characterised in that** the following formulae apply to the feed opening (18) of the housing (19) of the screw(s) (21, 22):

$$h \geq k\,0.6\,d$$

and

$$L \geq k\,0.6\,d,$$

where

h is the effective height of the feed opening (18) in mm, measured in the axial direction of the container (1),
L is the effective length of the feed opening (18) in mm, measured in the circumferential direction of the container (1),
d is the outer diameter of the screw turns (30) in mm and
k is the number of screws, k preferably being 2.

**14.** A device according to any one of claims 1 to 13, **characterised in that** the base (33) of the feed opening (18) slopes downwards from the screws (21, 22) towards the container (1).

## Revendications

**1.** Dispositif de traitement de matière plastique à recycler, notamment de déchets thermoplastiques, avec un conteneur (1) comportant, dans sa partie haute, une ouverture d'admission (10) destinée à recevoir le matériau à traiter et à l'intérieur duquel est prévu au moins un outil mobile de mélangeage et/ou de broyage (14), le matériau traité par ledit outil (14) étant acheminé vers une ouverture d'évacuation (17) agencée dans la partie basse dudit conteneur (1) et raccordée à l'ouverture d'alimentation (18) d'un carter d'un dispositif (20) comportant une vis sans fin (21), **caractérisé en ce que** ledit dispositif (20) raccordé à l'ouverture d'évacuation (17) comporte au moins deux vis sans fin (21, 22) alimentées conjointement en matériau provenant du conteneur (1), et **en ce que** le diamètre (D) du conteneur (1) est lié au diamètre (d) de chaque vis sans fin (21, 22) selon la relation :

$$D = 10\,\sqrt[3]{d^{\,2}K}$$

où

D est le diamètre interne en mm du conteneur cylindrique (1) ou le diamètre interne d'un conteneur cylindrique fictif de même contenance et de même hauteur utile,
d est le diamètre en mm de la vis sans fin et
K est une constante supérieure ou égale à 50.

**2.** Dispositif selon la revendication 1, **caractérisé en ce que** K est supérieur à 100.

**3.** Dispositif selon la revendication 1 ou 2, **caractérisé en ce que** le carter du dispositif (20) comportant les vis sans fin (21, 22) est raccordé directement à l'ouverture d'évacuation (17) du conteneur (1) de façon qu'une ouverture d'alimentation (18) du carter (19) dudit dispositif (20) soit directement adjacente à l'ouverture d'évacuation (17) du conteneur (1), voire coïncide avec elle.

**4.** Dispositif selon la revendication 3, **caractérisé en ce que** le carter (19) des deux vis sans fin (21, 22) est raccordé tangentiellement à la périphérie du conteneur (1).

**5.** Dispositif selon la revendication 4, **caractérisé en ce que** les sections transversales des vis sans fin (21, 22) sont superposées verticalement ou obliquement, dans le carter (19), au niveau de l'ouverture d'alimentation (18).

**6.** Dispositif selon l'une quelconque des revendications 1 à 5, **caractérisé en ce que** le dispositif (20) présentant les vis sans fin (21, 22) est un dispositif de plastification ou d'agglomération.

**7.** Dispositif selon la revendication 5 ou 6, **caractérisé en ce que** des canaux de refroidissement (34) sont agencés dans le carter (19) des vis sans fin (21, 22) au niveau de l'ouverture d'alimentation (18).

**8.** Dispositif selon l'une quelconque des revendications 1 à 7, **caractérisé en ce que** les filetages (30) des vis sans fin (21, 22) s'engrènent au moins au niveau de l'ouverture d'alimentation (18).

**9.** Dispositif selon l'une quelconque des revendications 1 à 8, **caractérisé en ce que** l'outil de mélangeage et/ou de broyage (14) tourne autour de l'axe vertical (2) du conteneur.

**10.** Dispositif selon l'une quelconque des revendications 4 à 9, **caractérisé en ce que** la paroi latérale aval (28) de l'orifice d'alimentation (18), dans le sens de défilement des outils (14), constitue le bord d'un élargissement continu (36) de l'orifice d'alimentation (18) vers l'axe longitudinal (29) du carter (19) des vis sans fin (21, 22), ledit élargissement s'étendant en direction dudit axe longitudinal au moins jusqu'à la périphérie du filetage (30) de la vis sans fin voisine (21 ou 22), de sorte que ledit élargissement (36) forme une arête de coupe (39) ininterrompue coopérant avec lesdits filetages de vis sans fin (30).

**11.** Dispositif selon la revendication 10, **caractérisé en ce que** l'élargissement (36) s'étend jusqu'au niveau de l'axe de vis sans fin.

**12.** Dispositif selon la revendication 10 ou 11, **caractérisé en ce que** la paroi latérale (28) de l'ouverture d'alimentation (18), qui constitue le bord de l'élargissement (36), forme avec l'axe longitudinal (29) du carter de vis sans fin (19) un angle compris entre 20 et 80°, de préférence compris entre 30 et 55°.

**13.** Dispositif selon l'une quelconque des revendications 1 à 12, **caractérisé en ce que** les formules suivantes s'appliquent à l'orifice d'alimentation (18) du carter (19) des vis sans fin (21, 22) :

$$h \geq k\, 0{,}6\, d$$

et

$$L \geq k\, 0{,}6\, d,$$

où

h est la hauteur utile en mm de l'ouverture d'alimentation (18), mesurée dans la direction axiale du conteneur (1).

L est la longueur utile en mm de l'ouverture d'alimentation (18), mesurée dans la direction circonférentielle du conteneur (1).

d est le diamètre externe du filetage de vis sans fin (30) en mm et

k est le nombre de vis sans fin, k étant avantageusement égal à 2.

**14.** Dispositif selon l'une quelconque des revendications 1 à 13, **caractérisé en ce que** la base (33) de l'ouverture d'alimentation (18) descend depuis les vis sans fin (21, 22) en direction du conteneur (1).

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0139948 A
- EP 1173315 A